# EUROPEAN PATENT APPLICATION

(11) **EP 4 509 961 A1**
(43) Date of publication of application: **19.02.2025**
(21) Application number: 24187604.4
(22) Date of filing: 10.07.2024
(51) Int. Cl.: G06F 3/01

(54) **A METHOD, AN APPARATUS AND A COMPUTER PROGRAM PRODUCT FOR XR APPLICATION**

(30) Priority: 15.08.2023 FI 20235916
(71) Applicant: Nokia Technologies Oy, 02610 Espoo (FI)
(72) Inventor: GÜL, Serhan, Berlin (DE); ILLAHI, Gazi Karam, Espoo (FI); AHSAN, Saba, Islamabad (PK); MATE, Sujeet Shyamsundar, Tampere (FI); CURCIO, Igor Danilo Diego, Gravina di Catania (IT)
(74) Representative: Nokia EPO representatives

(57) **Abstract**

The embodiments relate to a client and a server for a pose correction. The client performs the following: predicting a pose of a user for an estimated display time; sending the predicted pose to a server; receiving from the server a rendered image and a rendered pose, wherein the rendered pose corresponds to the predicted pose; determining a final pose, wherein the final pose corresponds to an estimated pose of the user at a time when the image is displayed to the user; reprojecting the rendered image using the final pose; and means for determining a metric relating to a received image and a reprojected image, and sending the metric as a feedback message. The server renders an image for a rendered pose, wherein the rendered pose corresponds to the predicted pose received from the client.

## Description

### Technical Field

The present solution generally relates to extended reality. In particular, the present solution relates to pose correction in extended reality.

### Background

Extended reality (XR) is considered to refer to all real-and-virtual combined environments and human-machine interactions generated by computer technology and wearables. It includes representative forms such as Augmented Reality (AR), Mixed Reality (MR) and Virtual Reality (VR) and the areas interpolated among them. The levels of virtuality range from partially sensory inputs to fully immersive VR. A key aspect of XR is the extension of human experiences especially relating to the senses of existence (represented by VR) and the acquisition of cognition (represented by AR).

XR data can be consumed both using traditional devices, typically on a flat screen (e.g., mobile phones and tables) as well as on emerging AR/MR glasses, in a more immersive way.

A user's position in an XR environment may be expressed using concept of "spaces", which provide a relation of the user's physical environment with other tracked entities (which may be real world or virtual objects). When rendering a view relating to user's pose and position, there may be need for a pose correction. Accuracy of pose correction depends on several factors including the capabilities of the reprojection algorithm, amount of the difference between the pose used for the pre-rendered image (rendered pose) and final pose, scene complexity and occlusions/disocclusions. Hence, in some cases, pose correction may fail to produce visually satisfactory results.

### Summary

The present embodiments improve the pose correction accuracy by various methods, apparatuses and computer program products.

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium for a server and a client, which method, apparatus and computer readable medium are characterized by what is stated in the independent claims. Various embodiments are disclosed in the dependent claims.

According to a first aspect, there is provided a client apparatus comprising means for predicting a pose of a user for an estimated display time; means for sending the predicted pose to a server; means for receiving from the server a rendered image and a rendered pose, wherein the rendered pose corresponds to the predicted pose; means for determining a final pose, wherein the final pose corresponds to an estimated pose of the user at a time when the image is displayed to the user; means for reprojecting the rendered image using the final pose; means for determining a metric relating to a received image and a reprojected image, and for sending the metric as a feedback message.

According to a second aspect, there is provided a server apparatus comprising means for receiving a predicted pose for an estimated display time from a user equipment; means for rendering an image for rendered pose, wherein the rendered pose corresponds to the predicted pose; means for transmitting the rendered image and the rendered pose to the user equipment; means for receiving a feedback message from the user equipment, the feedback message comprising a metric relating to the rendered image and a reprojected image; and as a response to the feedback message, means for transmitting auxiliary data accordingly.

According to a third aspect, there is provided a method for a client apparatus, comprising: predicting a pose of a user for an estimated display time; sending the predicted pose to a server; receiving from the server a rendered image and a rendered pose, wherein the rendered pose corresponds to the predicted pose determining a final pose, wherein the final pose corresponds to an estimated pose of the user at a time when the image is displayed to the user; reprojecting the rendered image using the final pose; and determining a metric relating to a received image and a reprojected image, and sending the metric as a feedback message.

According to a fourth aspect, there is provided a method for a server apparatus, comprising: receiving a predicted pose for an estimated display time from a user equipment; rendering an image for a rendered pose, wherein the rendered pose corresponds to the predicted pose; transmitting the rendered image and the rendered pose to the user equipment; receiving a feedback message from the user equipment, the feedback message comprising a metric relating to the rendered image and a reprojected image; and as a response to the feedback message, transmitting auxiliary data accordingly.

According to a fifth aspect, there is provided a client apparatus comprising at least one processor, memory including computer program code, the memory and the computer program code configured to, with the at least one processor, cause the apparatus to perform at least the following: predict a pose of a user for an estimated display time; send the predicted pose to a server; receive from the server a rendered image and a rendered pose, wherein the rendered pose corresponds to the predicted pose; determine a final pose, wherein the final pose corresponds to an estimated pose of the user at a time when the image is displayed to the user; reproject the rendered image using the final pose; and determine a metric relating to a received image and a reprojected image, and send the metric as a feedback message.

According to a sixth aspect, there is provided a server apparatus comprising at least one processor, memory including computer program code, the memory and the computer program code configured to, with the at least one processor, cause the apparatus to perform at least the following: receive a predicted pose for an estimated display time from a user equipment; render an image for a rendered pose, wherein the rendered pose corresponds to the predicted pose; transmit the rendered image and the rendered pose to the user equipment; receive a feedback message from the user equipment, the feedback message comprising a metric relating to the rendered image and a reprojected image; and as a response to the feedback message, transmit auxiliary data accordingly.

According to a seventh aspect, there is provided a computer program product comprising computer program code configured to, when executed on at least one processor, cause an apparatus or a system to: predict a pose of a user for an estimated display time; send the predicted pose to a server; receive from the server a rendered image and a rendered pose, wherein the rendered pose corresponds to the predicted pose; determine a final pose, wherein the final pose corresponds to an estimated pose of the user at a time when the image is displayed to the user; reproject the rendered image using the final pose; and determine a metric relating to a received image and a reprojected image, and send the metric as a feedback message.

According to an eighth aspect, there is provided a computer program product comprising computer program code configured to, when executed on at least one processor, cause an apparatus or a system to: receive a predicted pose for an estimated display time from a user equipment; render an image for a rendered pose, wherein the rendered pose corresponds to the predicted pose; transmit the rendered image and the rendered pose to the user equipment; receive a feedback message from the user equipment, the feedback message comprising a metric relating to the rendered image and a reprojected image; and as a response to the feedback message, transmit auxiliary data accordingly.

According to an embodiment, the client apparatus receives additional data in response to the feedback message, said additional data improving the reprojection quality.

According to an embodiment, the client apparatus receives an indication in response to the feedback message, and for altering the method of reprojection in response to the indication.

According to an embodiment, the metric comprises a pose correction metric or an image similarity metric or both.

According to an embodiment, the type of the metric is negotiated between the server and the client.

According to an embodiment, the pose correction metric comprises a distance between a rendered pose and a final pose used for reprojection.

According to an embodiment, the distance comprises a distance between position or quaternion components of a rendered pose and a final pose used for reprojection or a combination thereof.

According to an embodiment, the distance comprises a vector difference between position components or quaternion difference between the quaternion components of a rendered pose and a final pose used for reprojection or a combination thereof.

According to an embodiment, the metric comprises a pre-negotiated or mutually acceptable image similarity metric.

According to an embodiment, the feedback message further comprises a rendered pose, an identifier and a corresponding final pose.

According to an embodiment, the server apparatus further comprises comparing the received metric to a pre-defined threshold, and transmitting auxiliary data according to the comparison.

According to an embodiment, the auxiliary data comprises additional information for improving reprojection.

According to an embodiment, the auxiliary data comprises depth images with greater resolution for improving the reprojection.

According to an embodiment, the auxiliary data comprises signaling to change the reprojection mode.

According to an embodiment, the auxiliary data comprises signaling indicating a reduction in information that can be used for reprojection.

According to an embodiment, the computer program product is embodied on a non-transitory computer readable medium.

### Description of the Drawings

In the following, various embodiments will be described in more detail with reference to the appended drawings, in which
Fig. 1 shows an example of a packet format for feedback messages in RTP;
Fig. 2 shows an example of a procedure for measuring a pose error and time error in pose prediction;
Fig. 3 shows an example of using a second prediction of the display time for the example of Figure 2;
Fig. 4 shows an example of pose correction in MeCAR;
Fig. 5 shows a process for pose correction feedback according to an embodiment;
Fig. 6 shows an example of a packet format according to an embodiment;
Fig. 7a shows a method according to an embodiment;
Fig. 7b shows a method according to another embodiment; and
Fig. 8 shows an apparatus according to an embodiment.

### Description of Example Embodiments

The present embodiments improve the technology by enabling the user equipment to inform the rendering server on the pose correction accuracy, which further improves the reprojection quality.

The following description and drawings are illustrative and are not to be construed as unnecessarily limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

Before discussing the specific embodiments, a short reference to related technology is given which provides technical background for present embodiments.

### Extended Reality

Term "Extended Reality (XR)" refers to real-and-virtual combined environments and human-machine interactions generated by computer technology and wearables. It includes representative forms such as AR, MR and VR and the areas interpolated among them. The levels of virtuality range from partially sensory inputs to fully immersive VR. A key aspect of XR is the extension of human experiences especially relating to the senses of existence (represented by VR) and the acquisition of cognition (represented by AR).

XR media and metadata can be consumed both using traditional devices, typically on a flat screen (e.g., mobile phones and tables) as well as on emerging AR/MR glasses, in a more immersive way. 3GPP TS 26.998 contains a study of such glass-type AR/MR devices in the context of 5G radio and network services.

### XR interaction metadata

During 3GPP SA4#1 17-e the New Work Item on "Media Capabilities for Augmented Reality" (MeCAR) in S4-220332 was agreed and afterwards approved in by SA#95e in SP-220242. One of the objectives of MeCAR is to "define media types and formats produced and consumed by the AR device, including basic scene descriptions, audio, graphics and video as well as sensor information and metadata about user and environment."

MeCAR PD v7.0 [S4-230738] defines different types of interaction metadata that can be utilized in XR applications:
- AR anchor
- User pose
- Field of View (FOV)
- Viewport
- Gesture
- Body action
- Facial expression
- Sensor information
- Eye gaze

A user's position in an XR environment may be expressed using the concept of "spaces", which provide a relation of the user's physical environment with other tracked entities. An *XR Space* represents a virtual coordinate system with an *origin* that corresponds to a physical location. The world coordinate system is the coordinate system in which the virtual world is created. Coordinate systems are important when operating in 3-dimensional virtual and real worlds for XR applications.

An XR pose describes a position and orientation relative to an XR space. The XR pose may be associated with a timestamp indicating its sampling time.
- The position in the XR space is a 3D-vector (three-dimensional) representing the position within a space and relative to the origin defined by the (x, y, z) coordinates. If used to represent physical distances, x, y, and z are in meters.
- The orientation in the XR space is a quaternion representing the orientation within a space and defined by a four-dimensional or homogeneous vector with (x, y, z, w) coordinates, with w being the real part of the quarternion and x, y and z the imaginary parts.

Other representations using Euler angles (yaw, pitch, roll) and rotation matrices are possible but less common in XR.

In the MeCAR PD v7.0, a message format is defined for the transmission of pose information from the user equipment (UE) in the uplink direction using the WebRTC/IMS data channel. The following description on the pose prediction format originates from the MeCAR PD v7.0.

### Pose Prediction Format

The split rendering client (SRC) on the XR device periodically transmits a set of pose predictions to the split rendering server (SRS). The type of the message shall be set to "**urn:3gpp:split-rendering:v1:pose**".

Each predicted pose may contain the associated predicted display time and an identifier of the XR space that was used for that pose.

Depending on the view configuration of the XR session, there can be different pose information for each view.

The payload of the message shall be as follows:

| **Name** | **Type** | **Cardinality** | **Description** |
|---|---|---|---|
| poseInfo | Object | 1..n | An array of pose information objects, each corresponding to a target display time and XR space. |
| displayTime | number | 1..1 | The time for which the current view poses are predicted. |
| xrSpace | number | 0..1 | An identifier for the XR space in which the view poses are expressed. The set of XR spaces are agreed on between the split rendering client and the split rendering server at the setup of the split rendering session. |
| viewPoses | Object | 0.. n | An array that provides a list of the poses associated with every view. The number of views is determined during the split rendering session setup between the split rendering client and server, depending on the view configuration of the XR session. |
| pose | Object | 1..1 | An object that carries the pose information for a particular view. |
| orientation | Object | 1..1 | Represents the orientation of the view pose as a quaternion based on the reference XR space. |
| X | number | 1..1 | Provides the x coordinate of the quaternion. |
| Y | number | 1..1 | Provides the y coordinate of the quaternion. |
| Z | number | 1..1 | Provides the z coordinate of the quaternion. |
| W | number | 1..1 | Provides the w coordinate of the quaternion. |
| position | Object | 1..1 | Represents the location in 3D space of the pose based on the reference XR space. |
| X | number | 1..1 | Provides the x coordinate of the position vector. |
| Y | number | 1..1 | Provides the y coordinate of the position vector. |
| Z | number | 1..1 | Provides the z coordinate of the position vector. |
| fov | Object | 1..1 | Indicates the four sides of the field of view used for the projection of the corresponding XR view. |
| angleLeft | number | 1..1 | The angle of the left side of the field of view. For a symmetric field of view this value is negative. |
| angleRight | number | 1..1 | The angle of the right side of the field of view. |
| angleUp | number | 1..1 | The angle of the top part of the field of view. |
| angleDown | number | 1..1 | The angle of the bottom part of the field of view. For a symmetric field of view this value is negative. |

### XR interaction latency

XR headsets may use inside-out tracking, whereby the cameras and other sensors that are used to determine the object's position in space are located on the headset. XR headsets can sample pose at a high frequency, up to 1 kHz. This is sampling rate of the inertial measurement units (IMU) and the actual pose estimate is obtained by a combination of optical and inertial data (visual-inertial tracking). Since the device cameras may capture at a frame rate of 30-60 Hz, optical tracking is limited to a relatively low rate. However, high sampling rate of IMU sensors enable updating the pose at a much faster rate (on the order of 1 kHz), and the device can obtain a pose estimate every 1-2ms. Any other suitable form of tracking may be used which offers sufficiently higher sampling frequency to achieve the desired pose prediction accuracy.

Motion-to-photon latency is defined as the delay between the movement of the user's head and the change of the XR device's display reflecting the user's movement. For scenarios, where the rendering takes place (either fully or partially) on a remote server, "pose-to-render-to-photon latency" is defined, which takes into account the network RTT and rendering time on the server.

In order to reduce the motion-to-photon latency (or pose-to-render-to-photon latency in networked scenarios), XR devices may also use pose prediction algorithms. In remote/split rendering (SR) scenarios, the XR device may predict a pose for an estimated target display time and send that pose to the SR server. The SR server renders a view based on the pose and sends it to the XR device. Accuracy of pose prediction depends on the employed prediction algorithm and how far into the future the prediction is performed. Predictions become less accurate as they get farther into the future.

### Pose correction

The term "pose correction" refers to the application of a reprojection algorithm to the pre-rendered image, just before the image is sent to the display. The pre-rendered image may not exactly match the user's actual pose at the display time, due to prediction inaccuracies. The mismatch is higher in remote/split rendering scenarios where the prediction is performed for a longer time interval. To alleviate the mismatch, the UE may apply a correction to the pre-rendered image based on the latest available pose information. The pose information may be provided by a pose tracker that has a higher sampling rate than the rendering frame rate. The applied correction can e.g., be a planar homography/perspective transformation relating the points in one view (corresponding to the pose used in the pre-rendered image) to another view (corresponding to the latest pose). More complex transformations using depth images for more accurate reprojection and occlusion filling are available.

Pose correction may be implemented in the final stage of the rendering pipeline of AR/MR head-mounted displays (HMD) like Microsoft HoloLens and VR HMDs like Meta Quest. In HoloLens, the technique is called Late Stage Reprojection (LSR). The pose correction may also be applied in rendering for conventional 2D (two-dimensional) or 3D displays (mobile devices or 3D TV).

LSR is a hardware feature that helps stabilizing holograms when the user moves. HoloLens has four main types of reprojections:
- **Depth Reprojection:** Produces the best results with the least amount of effort from the application. All parts of the rendered scene are independently stabilized based on their distance from the user. Some rendering artifacts may be visible where there are sharp changes in depth. This option is only available on HoloLens 2 and Immersive Headsets.
- **Planar Reprojection:** Allows the application precise control over stabilization. A plane is set by the application and everything on that plane will be the most stable part of the scene. The further a hologram is away from the plane, the less stable it will be. This option is available on Windows MR platforms.
- **Automatic Planar Reprojection:** The system sets a stabilization plane using information in the depth buffer. This option is available on HoloLens generation 1 and HoloLens 2.
- **None:** If the application does nothing, Planar Reprojection is used with the stabilization plane fixed at 2 meters in the direction of the user's head gaze, usually producing substandard results.

Similar to local rendering scenarios, pose prediction and correction are also used in remote/split rendering scenarios. Azure Remote Rendering, the cloud rendering platform of Microsoft, allows to choose between two different LSR modes, namely Planar LSR or Depth LSR. Both LSR modes improve hologram stability, although they have their distinct limitations.

For Depth LSR to work, the client application must supply a valid depth buffer that contains all the relevant geometry to consider during LSR. Depth LSR attempts to stabilize the video frame based on the contents of the supplied depth buffer. As a consequence, content that has not been rendered to it, such as transparent objects, cannot be adjusted by LSR and may show instability and reprojection artifacts.

Planar LSR does not have per-pixel depth information, as Depth LSR does. Instead, it reprojects all content based on a plane that must be provided for each frame. Planar LSR reprojects those objects best that lie close to the supplied plane. The further away an object is, the more unstable it will look. While Depth LSR is better at reprojecting objects at different depths, Planar LSR may work better for content aligning well with a plane.

For their VR HMDs like Meta Quest, Meta/Oculus has two implementations called Asynchronous Timewarp (ATW) and Asynchronous Spacewarp (ASW). "Asynchronous" refers to this process being continuously performed in parallel with rendering. ATW uses the headset's rotational data to extrapolate a new rendered frame based on the last frame it received. ASW additionally uses depth information to help compensate for perspective and other geometric changes. Both functionalities are provided as part of the Oculus SDK.

### OpenXR and relevant extensions

OpenXR is an open, royalty-free standard for access to VR and AR platforms and devices. It is developed by a working group managed by the Khronos Group consortium. The standard provides an API aimed for application developers targeting VR/AR hardware. This enables developers to build applications that will work across a wide variety of devices.

OpenXR is designed to be a layered API, which means that a user or application may insert API layers between the application and the runtime implementation. For example, an application must call a specific API to submit its rendered image to the XR headset. An API layer (software) can be inserted to intercept this API call, perform its own processing on the rendered image, before forwarding the call to the OpenXR runtime. An example API layer implementation is the OpenXR toolkit that provides additional features like upscaling, foveated rendering and overlays by intercepting the rendering targets and apply processing on them.

OpenXR has the following extensions relevant to reprojection capabilities:
- **XR_KHR_composition_layer_depth:**
   This extension defines an extra layer type which allows applications to submit depth images along with color images in projection layers, i.e., XrCompositionLayerProjection. The XR runtime may use this information to perform more accurate reprojections taking depth into account.
- **XR_MSFT_composition_layer_reprojection:**
   This extension enables an application to provide additional reprojection information for a projection composition layer to help the runtime produce better hologram stability and visual quality.

### RTCP

The RTP control protocol (RTCP) is a protocol that works with the Real-time Transport Protocol (RTP). Its basic functionality and packet structure is defined in RFC 3550. RTCP provides out-of-band statistics and control information for an RTP session. Its primary function is to provide feedback on Quality of Service (QoS) in media distribution by periodically sending statistics information such as transmitted octet and packet counts, packet loss, packet delay variation and round-trip delay time to participants in a streaming session. An application may use this information to control QoS service parameters e.g., by limiting flow or using a different codec.

RTCP reports are expected to be sent by all participants, even in a multicast session which may involve thousands of recipients. Such traffic will increase proportionally with the number of participants. Thus, to avoid network congestion, the protocol must include session bandwidth management. This is achieved by dynamically controlling the frequency of report transmissions. RTCP bandwidth usage should generally not exceed 5% of the total session bandwidth.

The RTCP reporting interval is randomized to prevent unintended synchronization of reporting. The recommended minimum RTCP report interval per endpoint is 5 seconds. Endpoints should not transmit RTCP reports more often than once every 5 seconds.

### RTCP Feedback messages

An RTCP Feedback (FB) message is used to convey information about events observed at a receiver back to the sender of the media stream (in addition to the long-term receiver status information carried in RTCP receiver reports). RTCP-based feedback may operate in one of three modes:
- Immediate Feedback mode: In this mode, the group size is below the feedback threshold, which gives each receiving party sufficient bandwidth to transmit the RTCP FB packets for the intended purpose. This means that, for each receiver, there is enough bandwidth to report each event by means of a virtually "immediate" RTCP FB packet.
- Early RTCP mode: In this mode, the group size and other parameters no longer allow each receiver to reach to each event that would be worth reporting (or that needed reporting). But feedback can still be given sufficiently often so that it allows the sender to adapt the media stream transmission accordingly and thereby increase the overall media playback quality.
- Regular RTCP mode: From some group size upwards, it is no longer useful to provide feedback for individual events from receivers at all, because of the time scale in which the feedback could be provided and/or because in large groups the sender(s) have no chance to react to individual feedback anymore.

Feedback (FB) threshold indicates the transition between Immediate Feedback and Early RTCP mode. For a multiparty scenario, the FB threshold indicates the maximum group size at which, on average, each receiver is able to report each event back to the sender(s) immediately, i.e., by means of an Early RTCP packet without having to wait for its regularly scheduled RTCP interval. This threshold is highly dependent on the type of feedback to be provided, network QoS (e.g., packet loss probability and distribution), codec and packetization scheme in use, the session bandwidth, and application requirements.

RTCP FB messages are classified into three categories as follows:
- Transport-layer FB messages;
- Payload-specific FB messages;
- Application layer FB message.

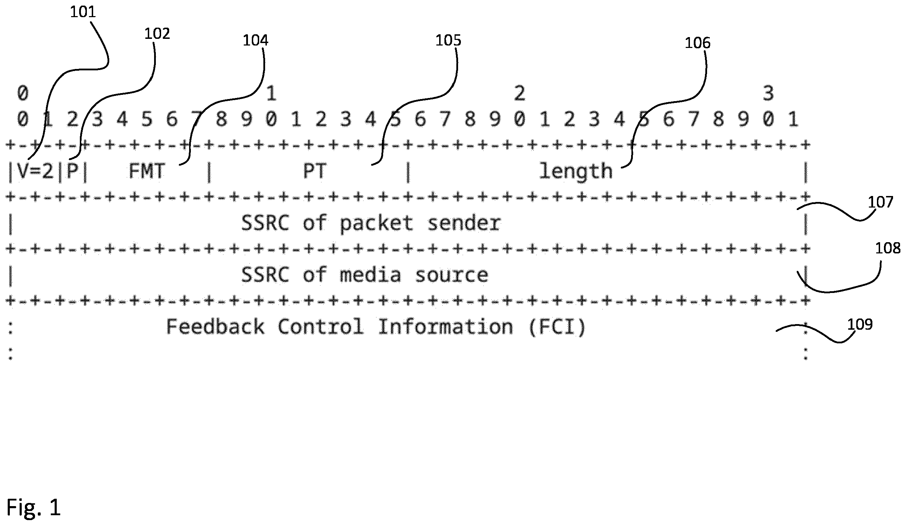

Figure 1 illustrates a common packet format to be used by the FB messages. The figure shows fields 101 - 109 that are defined in the RTP specification, the respective meaning being summarized below:
- V - version 101: 2 bits
   This field identifies the RTP version. The current version is 2.
- P - padding 102: 1 bit
   If set, the padding bit indicates that the packet contains additional padding octets at the end that are not part of the control information but are included in the length field.
- FMT - Feedback message type 104: 5 bits
   This field identifies the type of the FB message and is interpreted relative to the type (transport layer, payload-specific, or application layer feedback). The values for each of the three feedback types are defined in the respective sections below.
- PT - Payload type 105: 8 bits
   This is the RTCP packet type that identifies the packet as being an RTCP FB message. Two values are defined by the IANA: 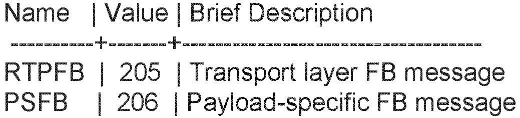
- Length 106: 16 bits
   The length of this packet in 32-bit words minus one, including the header and any padding. This is in line with the definition of the length field used in RTCP sender and receiver reports.
- SSRC of packet sender 107: 32 bits
   The synchronization source identifier for the originator of this packet.
- SSRC of media source 108: 32 bits
   The synchronization source identifier of the media source that this piece of feedback information is related to.
- FCI - Feedback Control Information 109: variable length
   The following three sections define which additional information MAY be included in the FB message for each type of feedback: transport layer, payload-specific, or application layer feedback. Note that further FCI contents MAY be specified in further documents.

Application layer FB messages provide means to transparently convey feedback from the receiver's to the sender's application. The information contained in such a message is not expected to be acted upon at the transport/RTP or codec layer. The data to be exchanged between two application instances is usually defined in the application protocol specification and thus can be identified by the application so that there is no need for additional external information.

Application layer FB messages are a special case of payload-specific messages and are identified by PT=PSFB and FMT=15. These messages are used to transport application-defined data directly from receiver's to the sender's application. The data that is transported is not identified by the FB message. Therefore, the application can identify the message payload. The applications may define their own set of messages. These messages do not need any additional information from the RTCP message. Thus, the application message is simply placed into the FCI field as follows and the length field is set accordingly.

Application Message (FCI): variable length:
This field contains the original application message that should be transported from the receiver to the source. The format is application dependent. The length of this field is variable. If the application data is not 32-bit aligned, padding bits and bytes MUST be added to achieve 32-bit alignment. Identification of padding is up to the application layer and not defined in this specification.

Pose error and Time error in pose prediction proposes the pose error and the time error in pose prediction as QoE metrics.

A pose can be described by a position and an orientation relative to an XR Space. The following table originating from TR 26.812 shows Viewer Pose Prediction Error:

| Key | | | Type | Description |
|---|---|---|---|---|
| ViewerPosePredictionErrorSet | | | Set | Set of viewer pose prediction errors. |
| | Entry | | Object | |
| | | Time | Integer | The time when the predicted viewer pose is used for. |
| | | Pose prediction error | Set | The deviation between the actual and predicted pose information. |
| | | FoV prediction error | Set | The deviation between the actual and predicted FoV. |

It should be noted that the actual pose (i.e., the pose the user has at the moment) may not be known during an XR session.

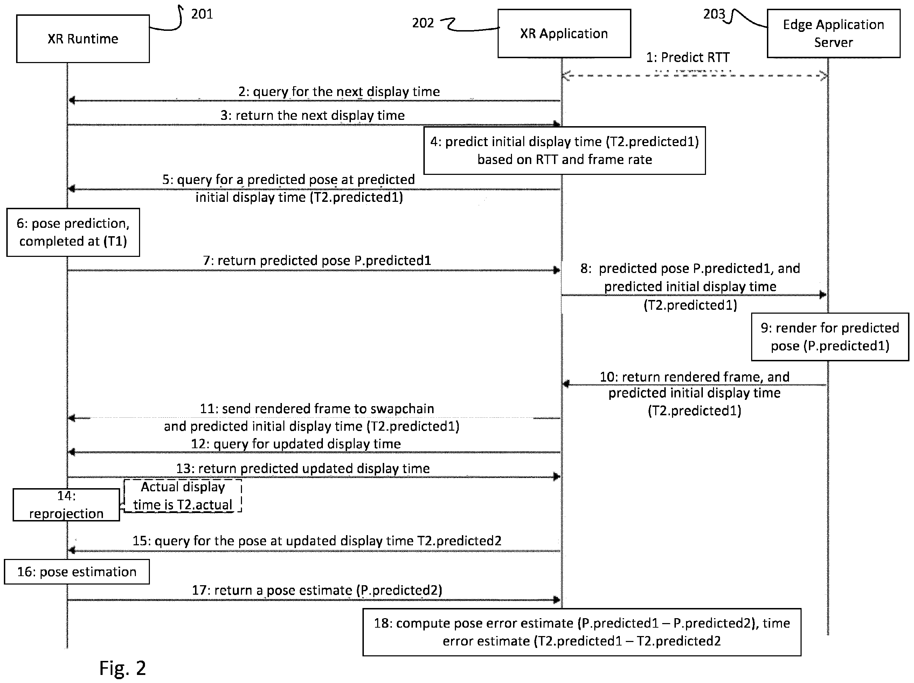

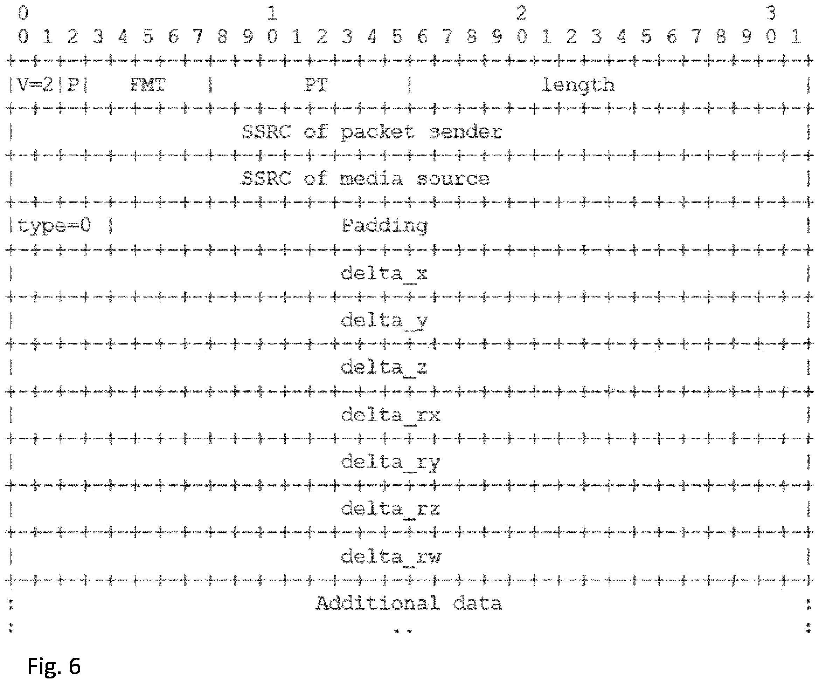

A measurement procedure for the scenario of cloud-based rendering is shown in Figure 2, which originates from Figure 6.3.5.3-1 in 3GPP TR 26.812 V0.5.0. The XR Runtime 201 and the XR Application 202 may be on a same device such as a UE, or on different devices such as an AR glasses (which hosts the XR Runtime 201) and a UE (which hosts the XR Application 202). Figure 2 shows the following steps:
1. The XR Application 202 estimates the round-trip time (RTT) between the XR application 202 and the Edge Application Server (EAS) 203.
2. The XR Application 202 queries for the next display time. This (and step 3) can be achieved by calling the xrWaitFrame function in OpenXR.
3. The XR Runtime 201 replies with the next display time.
4. The XR application 202 predicts a display time - an initial prediction - and the use of initial is because a second prediction/estimation will be made later. This predicted display time is referred to as T2.predicted1.
5. The XR application 202 queries for a predicted pose at the initial predicted display time T2.predicted1. Calling the function xrLocateViews in OpenXR can achieve this step and step 7.
6. The XR Runtime 201 generates a predicted pose, and the prediction occurs at time T1 (T1 < T2.predicted1).
7. The XR Runtime 201 returns the predicted pose (P.predicted1).
8. The XR application 202 sends the predicted pose (P.predicted1) and the associated initial predicted display time (T2.predicted1) to the EAS 203.
9. The EAS 203 renders for the predicted pose (P.predicted1), i.e., generating a rendered pose, and compresses the rendered frame comprising the rendered pose.
10. The EAS 203 returns the rendered frame along with the initial predicted display time (T2.predicted1) to the XR Application 202.
11. The XR Application 202 sends the rendered frame to the XR Runtine 201, e.g., via swapchain. This can be achieved by calling the xrReleaseSwapchainImage function in OpenXR. The XR Application 202 passes the display time used for the rendering the rendered frame, and this can be achieved by calling the xrEndFrame function in OpenXR.
12. The XR Application 202 queries for the predicted display time. This is intended to get a more accurate prediction of the display time than the one in step 4, because there is less time to predict into the future at this moment.
13. The XR Runtime 201 returns an updated prediction of the display time (T2.predicted2).
14. The XR Runtime 201 performs reprojection for pose correction. The actual display time is called T2.actual.
15. The XR Application 202 queries for the pose associated with the updated prediction of the display time (T2.predicted2). This can be achieved by calling the xrLocateViews function in OpenXR.
16. The XR Runtime 201 does pose estimation to predict a pose.
17. The XR Runtime 201 returns a predicted pose (P.predicted2).
18. The XR Application 202 computes a pose error estimate (P.predicted1 - P.predicted2) and a time error estimate(T2.predicted1 - T2. predicted2).

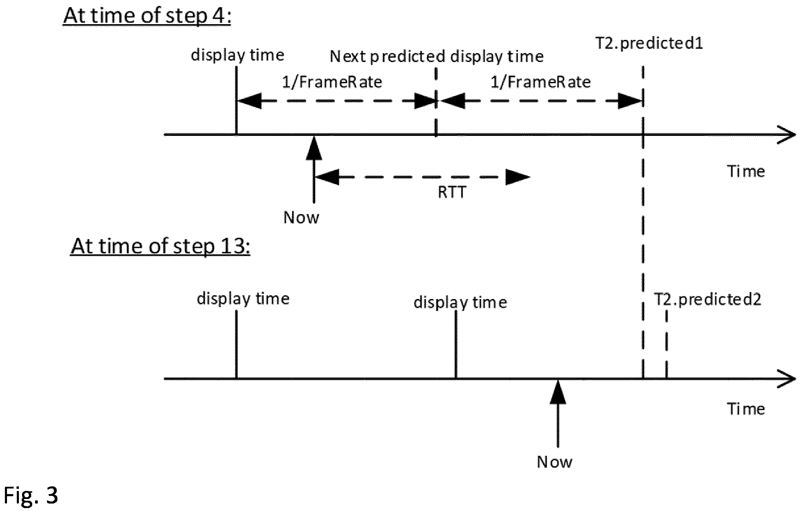

It is to be noted that two queries are used to predict the display time of a same frame. The first query occurs in step 2, and the query result is used to determine a target display time for the rendering process in step 4. The second query occurs much closer to the actual display time, as shown in steps 12-13, and thus provides higher accuracy. Figure 3 originating from Fig, 6.3.5.3-2 in 3GPP TR 26.812 V0.5.0 clarifies this example for steps 4 and 13 of Figure 2.

### Pose Correction in MeCAR

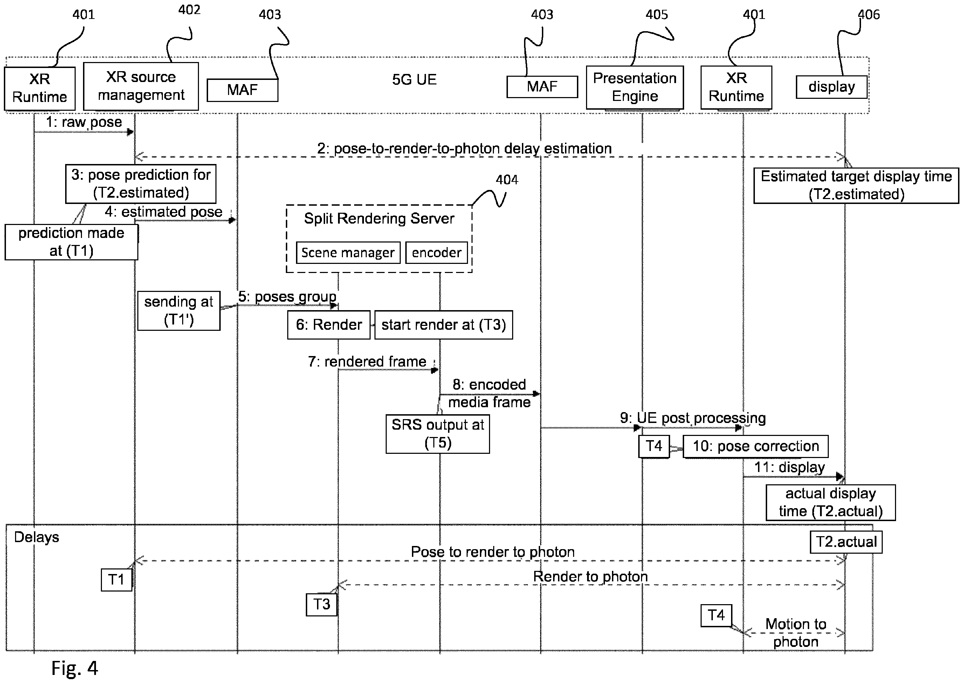

In the MeCAR PD v7.0, pose correction is performed by the XR runtime. The signaling flow and timing information is shown in Figure 4 (originating from the MeCAR PD v7.0). Pose correction is performed in step 10 as described in the procedure, shown in Figure 4. Figure 4 shows the following steps:
1. The raw pose is acquired by the XR Source Management 402 from the XR Runtime 401.
2. The XR Source Management 402 estimates the target display time (T2.estimated). To estimate that time, it uses the previous timestamps and delays measurements of the pose-to-render-to-photon which is the gap between the (T2.actual) and the pose estimate time (T1) for the most recent frame.
3. The XR Source Management 402 generates a predicted pose at the estimated target (T2.estimated) of the content. The pose prediction is made at (T1).
4. The UE Media Access Function(s) (MAF) 403 gets the predicted pose or group of predicted poses with the associated times metadata (T2.estimated, T1, previous-render-to-photon).
5. The UE MAF 403 sends the predicted pose or group of predicted poses and the associated time metadata. The MAF 403 appends to the time metadata the (T1') which is the time when the group of poses is sent from device.
6. The Scene Manager in the Split Rendering Server 404 renders the scene based on the received predicted pose. It records the time when the rendering started (T3) and appends it to the time metadata. The predicted pose used for rendering with its associated time metadata is stored with the output rendered media frame. In the case where there are poses stacked in the server's pose buffer, the Scene Manager in the Split Rendering Server 404 should select one of the (predicted pose, T2.estimated) pair following a local estimation of the display time by using the previous-render-to-photon received in the time metadata.
7. The rendered media frame is sent to the video encoder with the associated time metadata.
8. The Split Rendering Server 404 encodes the rendered media frame together with the associated time metadata. The (T5) timestamp is recorded at the output of the Split Rendering Server 404. The encoded media frame is sent from the Split Rendering Server 404 to the UE MAF 403 with the associated time metadata.
9. The UE MAF 403 decodes the media data. The rendered frame is then shared to the Presentation Engine 405 and the XR runtime 401.
10. The XR runtime 401 performs further processing such pose correction using the latest pose. The UE records the time (T4) of the latest pose.
11. The frame is displayed 406 at the actual display time (T2.actual).

Accuracy of pose correction depends on several factors including the capabilities of the reprojection algorithm, amount of the difference between the pose used for the pre-rendered image (rendered pose) and final pose (i.e., the user pose used for reprojection), scene complexity and occlusions/disocclusions. Hence, in some cases, pose correction may fail to produce visually satisfactory results.

In a remote/split rendering scenario, currently there is no way for the UE to inform the rendering server on the pose correction accuracy. Therefore, the rendering server is unaware of how effective the pose correction is. However, if the accuracy could be reported back to the server, it could potentially take some measures to help the UE improve the reprojection quality. For example, the UE may be able to utilize some additional data from the server to achieve more accurate pose correction. Furthermore, the UE may need instructions from the server to switch to a more complex reprojection algorithm that may provide a reprojection result with higher visual quality. Additional information in addition to the amount of pose correction may be required in order to inform the rendering server about the impact on image quality.

The present embodiments aim to solve above problems by enabling the receiver UE to send feedback on the accuracy of pose correction. This enables the server to potentially send additional data to enable better pose correction and/or instruct the UE to switch to a different reprojection algorithm.

The present embodiments provide different feedback messages from the receiver UE to server on pose correction accuracy and a signaling mechanism between the UE and server to enable server assistance.

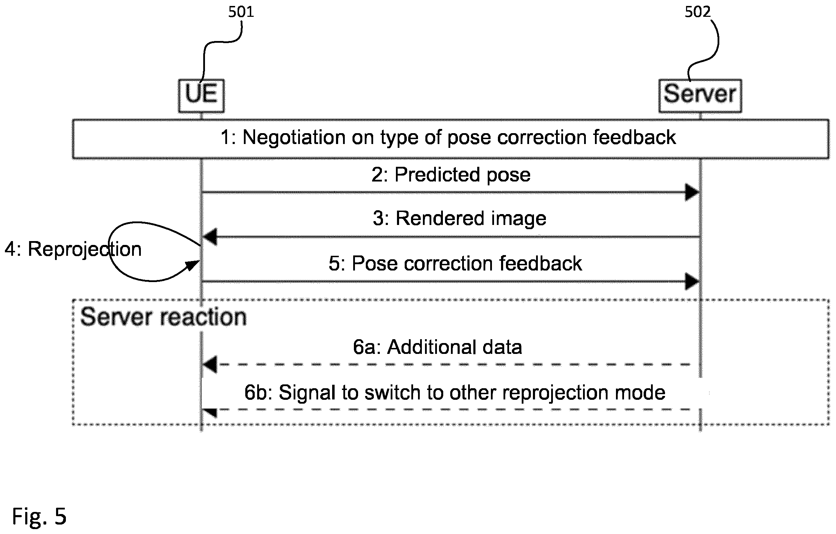

Figure 5 illustrates an example of an operation of a system according to present embodiments. In the operation, the following steps are carried out. It is to be noted that in the process steps, the following terms with the following definitions are used:
- "user pose" refers to the actual pose of the user at the current time, i.e., a raw pose. In particular, the "user pose" refers to the pose of user's head as reported by the HMD and used for AR/XR rendering;
- "predicted pose" refers to a pose that is predicted by the UE/SRS for a certain time in the future;
- "rendered pose" refers to a pose that is used for rendering an image at the SRS. The rendered pose is generated based on the predicted pose;
- "final pose" refers to a pose that is used for reprojection of the rendered image (as delivered by the SRS based on the rendered pose) at the UE. It may also be interchangeably referred to as the "reprojected pose".
- "delta pose" refers to the difference between the rendered pose and the final pose;

Each of the poses can be defined as combination of a position data and orientation data in an XR space, and may be associated with a timestamp.

The embodiments shown in Figure 5 are applicable in the XR applications using, for example, the rendering processes of Figure 2 or Figure 4 (step 10). Figure 5 shows the following steps:
1. UE 501 and server 502 negotiate on the type of pose correction feedback the UE 501 will send. For example, the feedback type can be a delta pose or an image similarity metric. Multiple feedback messages may be sent by the UE 501. Feedback information may be inserted into an RTCP feedback (FB) message. The negotiation may occur via SDP signalling.
2. UE 501 predicts a pose for an estimated display time and sends this pose to the server 502, for example over a data channel.
3. Server 502 renders an image for a rendered pose corresponding to the predicted pose sent by the UE 501, and transmits the rendered image to the UE 502, together with the rendered pose.
4. UE 501 determines a final pose, wherein the final pose is an estimate of the pose at a time when the image is to be displayed to the user, and reprojects (i.e., performs pose correction for) the rendered image with the final pose;
5. UE 501 computes a metric for pose correction based on the rendered pose and the final pose used for reprojection, and sends the metric to the server 502 in a feedback message.
6a. Server 502 sends additional data (e.g., depth images) that may help improve the reprojection quality.
6b. Server 502 signals the UE 501 to switch to another (possibly more sophisticated) reprojection mode that may improve the reprojection quality.

Steps 2-5 occur continuously throughout the streaming session. Steps 6a and/or 6b only occur sporadically, depending on the pose correction feedback, and if the accuracy of the pose computed at the server side is below (or above) a given threshold. This guarantees that steps 5a/5b are performed only when needed and transmission bits can be saved.

Steps 5 and 6 of Figure 5 can be implemented according to following embodiments:

### Step 5: Pose correction feedback

According to an embodiment, the UE computes a pose correction metric and sends the pose correction metric to the server as feedback. The pose correction metric is determined after reprojection has been performed, as shown in the process of Figure 5. The pose correction metric can be a delta pose, i.e., the difference between the rendered pose and the final pose used for reprojection.

Alternatively, or in addition, the pose correction metric can comprise a distance between the position components of the rendered pose and the final pose, a distance between the quaternion components of the rendered pose and the final pose used for reprojection or a combination thereof.

The distance between the position components of the rendered pose and the final pose used for reprojection may be one of: Euclidean distance, mean square distance, mean of element-wise distance.

The distance between the quaternion components of the rendered pose and the final pose used for reprojection may be one of: geodesic distance, spherical distance, mean of Euler angular distance.

In another embodiment, the pose correction metric may comprise a vector difference between the position components of the rendered pose and the final pose, a quaternion difference between the quaternion components of the rendered pose and the final pose used for reprojection or a combination thereof. It should be noted that quaternion difference between two orientations represented as quaternions may be computed using quaternion algebraic operations as understood in the art.

In another embodiment, the pose correction metric may be based, at least in part, on disocclusions in the reprojected image (for the displayed viewport). With respect to present embodiments, disocclusion means that a previously occluded region/object in the rendered image becomes visible after the reprojection.

In another embodiment, the pose correction metric may be based, at least in part, on the ratio of disoccluded pixels to the total number of pixels.

In yet further embodiment, the UE may compute an image similarity metric between the rendered image and reprojected image. Then, the UE may send the metric to the server as feedback. This metric can be for example PSNR (Peak Signal-to-Noise Ratio), SSIM (Structural Similarity Index Measure), Multi-Scale or Multi-Component SSIM, DSSIM (Structural Dissimilarity) or any other objective image similarity or dissimilarity metric. A potential implementation of this embodiment is described below:
- The UE can keep the rendered/uncorrected image in the frame buffer, do the reprojection and compute this metric, and then discard the first image.

For example, In OpenXR, this can be a custom API layer that intercepts the pre-rendered and reprojected images and compute the image similarity.

In an embodiment of one or more of the above embodiments, the pose correction metric is based at least in part on reprojection errors.

In an embodiment, the UE sends the processing time taken for pose correction to the server, either together with the pose correction metric or in a separate feedback message.

In an embodiment, the pose correction metric may be based on one or multiple of: a difference between the rendered pose and final pose used in reprojection, image similarity between the received frame/rendered image and the reprojected image, disocclusions in the reprojected image, processing time for pose correction, pose-to-render-to-photon latency, render-to-photon latency and pose-to-render latency.

In an embodiment, the UE may send the final pose used for reprojection to the server together with the received pose and an identifier, e.g., a timestamp.

In embodiments of the above embodiment, the information is sent periodically, or in response to a trigger event or in response to a server request or a combination thereof.

For all embodiments above, the UE can send the feedback information in an RTCP Feedback (FB) message. For example, this could be an application layer FB message, as defined in RFC4585 or an APP packet. Alternatively, the UE can send the correction feedback as an additional field in the pose information message that is carried over the WebRTC/IMS data channel. In case an RTCP FB message is used, the UE can offer/advertise this message capability in the SDP negotiation using the rtcp-fb attribute. A wildcard payload type ("*") may be used to indicate that the RTCP feedback attribute applies to all payload types. An example usage is as follows:
a=rtcp-fb:* reproj-fb

The message can be sent in an early RTCP packet (Immediate Feedback or Early RTCP mode in RFC4585) or as part of a regular RTCP report.

A sample application layer RTCP FB message can have the following information in the Feedback Control Information (FCI) field:
- Type of feedback
   - For example: 0 indicates delta pose (vector difference for position and quaternion difference for rotation components), value 1 indicates PSNR between received rendered and reprojected images, etc.
   - Size of this field can be 4 bits.
- Feedback information
   - Values of delta pose, image similarity metric etc.
   - Size depends on FB type, e.g., for FB type=0 above, 32 bits can be allocated for each of the position and quaternion components. Then, the size would be (3+4)*32 = 224 bits
- Additional data
   - For example, ratio of disoccluded pixels to the total pixels (due to reprojection)
   - Size depends on the type of additional data.

An example packet format is shown in Figure 6. FB type used in the example is 0, so delta pose is used where each position and rotation component is allocated 32 bits. Additional data may occupy more or less than 32 bits, depending on the data type. The order of the fields may be arranged differently with appropriate padding.

### Step 6: Server reaction

In an embodiment, if the pose correction metric received from the UE is greater (or less) than a predefined/negotiated threshold, the server can respond by transmitting additional information e.g., depth buffer or additional geometry data. The additional information can be sent in the same media stream that is sent to the UE, for example in the alpha channel of an RGBA stream, or in a separate media stream, or over a data channel. Conversely, if the received metric is less (or greater) than the threshold, the server may send less data, e.g., omit sending depth buffers to save bandwidth.

In an embodiment, if the pose correction metric received from the UE is greater (or less) than a predefined/negotiated threshold, the server responds by increasing the resolution or amount of the additional information sent to the client. For example, a downscaled depth buffer may be sent to the UE for depth-based reprojection. If the client reports that the pose correction metric is greater than a threshold, the server may increase the pixel resolution of the depth buffer images being sent.

In another embodiment, if the pose correction metric received from the UE is greater (or less) than a predefined/negotiated threshold, the server can signal the UE to switch to a different reprojection mode. For example, the UE might switch from planar reprojection to depth reprojection or vice versa.

In an embodiment, the above two embodiments can be combined, i.e., as response to a received pose correction metric that is greater (or smaller) than a predefined/negotiated threshold, the server can send additional information (e.g., depth buffer) and signal the UE to switch to a different reprojection mode.

In an embodiment, depending on the feedback on processing time taken for pose correction, the server may signal the UE to switch to another reprojection mode, which takes less processing time.

In an embodiment, if the received pose correction metric is less (or greater) than a predefined/negotiated threshold for a predefined/pre-negotiated period of time (could also be defined as number of consecutive correction messages being less than a threshold), the server responds by reducing the amount or resolution of the extra information being sent to the client.

In an embodiment, if the received pose correction metric is less (or greater) than a predefined/negotiated threshold for a predefined/pre-negotiated period of time (could also be defined as number of consecutive correction messages being less than a threshold), the server signals the UE to use a less sophisticated reprojection method.

In an embodiment, if the received pose correction metric is less (or greater) than a predefined/negotiated threshold for a predefined/pre-negotiated period of time (could also be defined as number of consecutive correction messages being less than a threshold), the server responds by reducing the amount or resolution of the extra information being sent to the client and signals the UE to use a less sophisticated reprojection method.

In an embodiment, if the pose correction metric is greater (or less) than a predefined/negotiated threshold for a predefined/prenegotiated period of time (could also be defined as number of consecutive correction messages being less than a threshold), the server responds by renegotiating an increase in the frequency of pose updates. If the pose correction metric is less (greater) than a predefined/negotiated threshold for a predefined/pre-negotiated period of time (could also be defined as e.g., number of consecutive correction messages being less than a threshold or the number of correction messages being less than a threshold in a time window), the server responds by renegotiating a decrease in the frequency of pose updates. In an embodiment, the renegotiation is triggered by the client. In another embodiment the change in frequency is done without a renegotiation.

In an embodiment, if the pose correction metric is greater (or less) than a predefined/negotiated threshold for a predefined/pre-negotiated period of time (could also be defined as e.g., number of consecutive correction messages being less than a threshold or the number of correction messages being less than a threshold in a time window), the server responds by offering pose prediction in the server. The client can then send raw pose information at a predetermined/negotiated sampling frequency and the prediction and rendering for the final pose (used for reprojection at the client) is done at the server. The client can continue to signal the difference of the rendered and final pose for the server to optimize the prediction.

In an embodiment, the UE sends the pose correction feedback as an aggregate of pose correction metrics over a period of time. For example, the UE may send the average, maximum or minimum delta pose or PSNR/SSIM measured during the time period.

In another embodiment, the UE sends the pose correction feedback only when the pose correction metric is above (or below) a predefined/pre-negotiated threshold. In a related embodiment, the condition for exceeding the threshold may be used together with a time period. For example, the UE sends pose correction feedback when the pose correction metric is above (or below) the value A for B number of times during the last C seconds.

In an embodiment, the server (periodically) stores the rendered pose, an identifier e.g., a timestamp, the rendered frame and corresponding state of the graphics scene, and later, on receiving a corresponding final pose used for reprojection at the client:
- renders a frame corresponding to the final pose received from the client using the stored graphics scene state,
- computes an error metric between the stored rendered frame and the newly rendered frame, and if the error metric is greater (less) than a predefined/negotiated threshold, reacts according to one or more of the above embodiments, e.g., signal the UE to switch to a different projection mode and/or send additional data to the UE for better reprojection.

In an embodiment, the UE and server can negotiate on the used pose correction/reprojection metric (e.g., delta pose or image similarity metric). An SDP attribute can be defined and thus a certain correction metric can be offered by the server in the SDP negotiation. Examples are:
a=reproj-metric:delta-pose
a=reproj-metric:PSNR

In a related embodiment, they can also negotiate threshold values beyond which server starts to transmit additional information or the UE switches to a more sophisticated reprojection mode. For example, if the PSNR measured between the rendered and reprojected images exceeds a certain value. Example of this is:
a=reproj-metric:PSNR 32

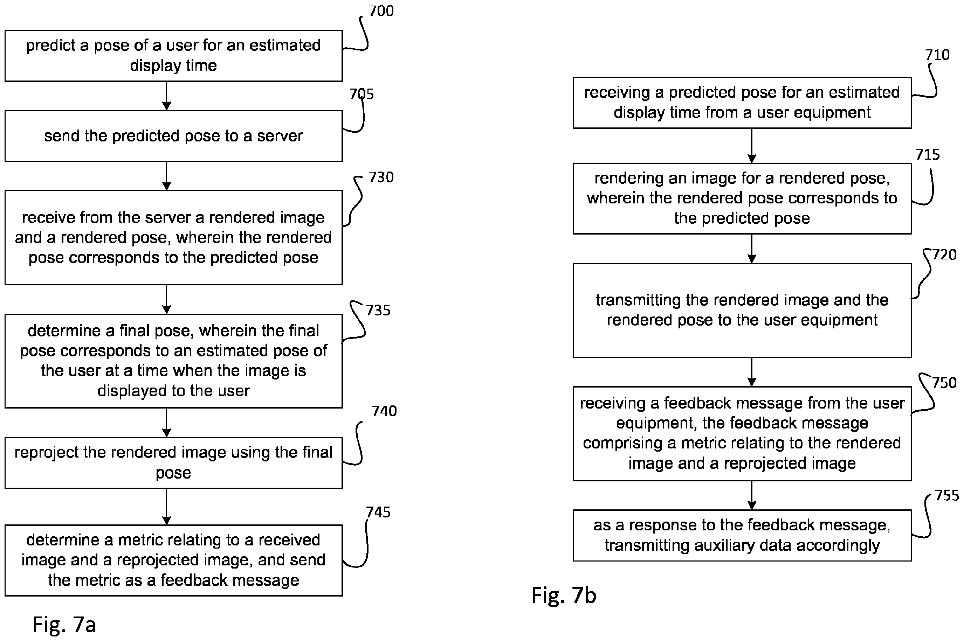

The method for a client apparatus according to an embodiment is shown in Figure 7a. The method generally comprises predicting 700 a pose of a user for an estimated display time; sending 705 the predicted pose to a server; receiving 730 from the server a rendered image and a rendered pose, wherein the rendered pose corresponds to the predicted pose; determining 735 a final pose, wherein the final pose corresponds to an estimated pose of the user at a time when the image is displayed to the user; reprojecting 740 the rendered image using the final pose; and determining 745 a metric relating to a received image and a reprojected image, and sending the metric as a feedback message. Each of the steps can be implemented by a respective module of a computer system.

An apparatus according to an embodiment comprises means for predicting a pose of a user for an estimated display time; means for sending the predicted pose to a server; means for receiving from the server a rendered image and a rendered pose, wherein the rendered pose corresponds to the predicted pose; means for determining a final pose, wherein the final pose corresponds to an estimated pose of the user at a time when the image is displayed to the user; means for reprojecting the rendered image using the final pose; means for determining a metric relating to a received image and a reprojected image, and for sending the metric as a feedback message. The means comprises at least one processor, and a memory including a computer program code, wherein the processor may further comprise processor circuitry. The memory and the computer program code are configured to, with the at least one processor, cause the apparatus to perform the method of Figure 7a according to various embodiments.

The method for a server apparatus according to an embodiment is shown in Figure 7b. The method generally comprises receiving 710 a predicted pose for an estimated display time from a user equipment; rendering 715 an image for a rendered pose, wherein the rendered pose corresponds to the predicted pose; transmitting 720 the rendered image and the rendered pose to the user equipment; receiving 750 a feedback message from the user equipment, the feedback message comprising a metric relating to the rendered image and a reprojected image; and as a response to the feedback message, transmitting 755 auxiliary data accordingly. Each of the steps can be implemented by a respective module of a computer system.

An apparatus according to an embodiment comprises means for receiving a predicted pose for an estimated display time from a user equipment; means for rendering an image for a rendered pose, wherein the rendered pose corresponds to the predicted pose; means for transmitting the rendered image and the rendered pose to the user equipment; means for receiving a feedback message from the user equipment, the feedback message comprising a metric relating to the rendered image and a reprojected image; and as a response to the feedback message, means for transmitting auxiliary data accordingly. The means comprises at least one processor, and a memory including a computer program code, wherein the processor may further comprise processor circuitry. The memory and the computer program code are configured to, with the at least one processor, cause the apparatus to perform the method of Figure 7b according to various embodiments.

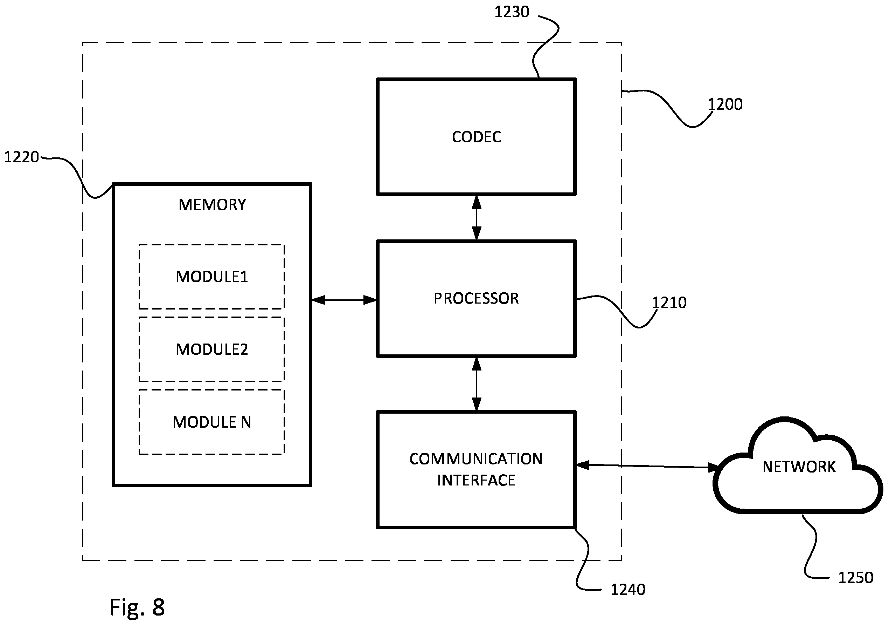

Figure 8 illustrates an example of an electronic apparatus 1200, being an example of user equipment. In some embodiments, the apparatus may be a mobile terminal or a user equipment of a wireless communication system or a camera device or a wearable display device. The apparatus 1200 may also be comprised at a local or a remote server or a graphic processing unit of a computer.

The apparatus 1200 comprises one or more processors 1210 and a memory 1220, wherein the memory 1220 stores computer instructions, for example in respective modules (Module1, Module2, ModuleN). The memory may store data in the form of image, video and/or audio data, and/or may also store instructions to be executed by the processors or the processor circuitry. The apparatus also comprises a codec 1230 that is configured to implement various embodiments relating to present solution. According to some embodiments, the apparatus may comprise an encoder or a decoder. The apparatus 1200 also comprises a communication interface 1240 which is suitable for generating wireless communication signals for example for communication with a cellular communications network, a wireless communications system, or a wireless local area network, and thus enabling data transfer over data transfer network 1250

The apparatus 1200 may comprise a display in the form of a liquid crystal display. In other embodiments of the invention the display may be any suitable display technology suitable to display an image or video. The apparatus 1200 may further comprise a keypad. In other embodiments of the invention any suitable data or user interface mechanism may be employed. For example, the user interface may be implemented as a virtual keyboard or data entry system as part of a touch-sensitive display or gaze controllable display. The apparatus 1200 may comprise a microphone or any suitable audio input which may be a digital or analogue signal input. The apparatus 1200 may further comprise an audio output device which in embodiments of the invention may be any one of: an earpiece, speaker, or an analogue audio or digital audio output connection. The apparatus 1200 may also comprise a battery (or in other embodiments the device may be powered by any suitable mobile energy device such as solar cell, fuel cell or clockwork generator). The apparatus may further comprise a camera capable of recording or capturing images and/or video. The camera may be a multi-lens camera system having at least two camera sensors. The camera is capable of recording or detecting individual frames which are then passed to the codec 1230 or to processor 1210. The apparatus may receive the video and/or image data for processing from another device prior to transmission and/or storage.

The apparatus 1200 may further comprise e.g., the other functional units disclosed in Figures 2, 4, or 5 for implementing any of the present embodiments.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus, comprising:
means for predicting a pose of a user for an estimated display time;
means for sending the predicted pose to a server;
means for receiving from the server a rendered image and a rendered pose, wherein the rendered pose corresponds to the predicted pose;
means for determining a final pose, wherein the final pose corresponds to an estimated pose of the user at a time when the image is displayed to the user;
means for reprojecting the rendered image using the final pose; and
means for determining a metric relating to a received image and a reprojected image, and for sending the metric as a feedback message.

2. The apparatus according to claim 1, further comprising means for receiving additional data in response to the feedback message, said additional data improving the reprojection quality.

3. The apparatus according to claim 1, further comprising means for receiving an indication in response to the feedback message, and for altering the method of reprojection in response to the indication.

4. The apparatus according to any of the claims 1 to 3, wherein the metric comprises a pose correction metric or an image similarity metric or both.

5. The apparatus according to claim 4, wherein the pose correction metric comprises a distance between a rendered pose and a final pose used for reprojection.

6. The apparatus according to claim 5, wherein the distance comprises a distance between position or quaternion components of a rendered pose and a final pose used for reprojection or a combination thereof.

7. The apparatus according to any of the claims 5 or 6, wherein the distance comprises a vector difference between position components or quaternion difference between the quaternion components of a rendered pose and a final pose used for reprojection or a combination thereof.

8. The apparatus according to any of the claims 1 to 3, wherein the metric comprises a pre-negotiated or mutually acceptable image similarity metric.

9. The apparatus according to any of the claims 1 to 8, wherein the feedback message further comprises a rendered pose, an identifier and a corresponding final pose.

10. An apparatus, comprising:
means for receiving a predicted pose for an estimated display time from a user equipment;
means for rendering an image for a rendered pose, wherein the rendered pose corresponds to the predicted pose;
means for transmitting the rendered image and the rendered pose to the user equipment;
means for receiving a feedback message from the user equipment, the feedback message comprising a metric relating to the rendered image and a reprojected image;
as a response to the feedback message, means for transmitting auxiliary data accordingly.

11. The apparatus according to claim 10, further comprising means for comparing a metric to a pre-defined threshold, and transmitting auxiliary data according to the comparison.

12. The apparatus according to claim 10 or 11, wherein the auxiliary data comprises additional information for improving reprojection.

13. The apparatus according to claim 10 or 11, wherein the auxiliary data comprises depth images with greater resolution or higher quality for improving the reprojection.

14. A method, comprising:
predicting a pose of a user for an estimated display time; sending the predicted pose to a server;
receiving from the server a rendered image and a rendered pose, wherein the rendered pose corresponds to the predicted pose;
determining a final pose, wherein the final pose corresponds to an estimated pose of the user at a time when the image is displayed to the user;
reprojecting the rendered image using the final pose; and
determining a metric relating to a received image and a reprojected image, and sending the metric as a feedback message.

15. A method, comprising:
receiving a predicted pose for an estimated display time from a user equipment;
rendering an image for a rendered pose, wherein the rendered pose corresponds to the predicted pose;
transmitting the rendered image and the rendered pose to the user equipment;
receiving a feedback message from the user equipment, the feedback message comprising a metric relating to the rendered image and a reprojected image;
as a response to the feedback message, transmitting auxiliary data accordingly.
